# EUROPÄISCHE PATENTSCHRIFT

(11) **EP 2 317 213 B1**
(45) Veröffentlichungstag und Bekanntmachung des Hinweises auf die Patenterteilung: **18.01.2017**
(21) Anmeldenummer: 10013835.3
(22) Anmeldetag: 21.10.2010
(51) Int. Cl.: F21S 8/10, F21S 8/12, F21V 19/00, F21K 9/00, F21Y 115/10

(54) **Leuchtdiodenmodul einer Kraftfahrzeugbeleuchtungseinrichtung und Kraftfahrzeugbeleuchtungseinrichtung**
Light diode module of a motor vehicle lighting device and motor vehicle lighting device
Module de diode luminescente d'un dispositif d'éclairage de véhicule automobile et dispositif d'éclairage de véhicule automobile

(30) Priorität: 03.11.2009 DE 102009052340
(43) Veröffentlichungstag der Anmeldung: 04.05.2011
(73) Patentinhaber: Automotive Lighting Reutlingen GmbH, 72762 Reutlingen (DE)
(72) Erfinder: Kleinert, Tobias, 72760 Reutlingen (DE); Bahnmüller, Gerd, 71088 Holzgerlingen (DE); Betz, Immanuel, 72768 Reutlingen (DE)
(74) Vertreter: DREISS Patentanwälte PartG mbB

(56) Entgegenhaltungen:
- EP-A2- 1 630 474
- DE-A1-102007 034 123
- FR-A1- 2 876 965
- JP-A- 2007 194 173
- US-A1- 2007 171 667
- US-A1- 2007 177 401
- US-A1- 2009 207 617

## Beschreibung

Die vorliegende Erfindung betrifft ein Leuchtdiodenmodul einer Beleuchtungseinrichtung für ein Kraftfahrzeug. Das Leuchtdiodenmodul umfasst ein Trägerelement, auf dem mindestens eine Leuchtdiode befestigt und kontaktiert ist. Außerdem betrifft die Erfindung eine Beleuchtungseinrichtung für ein Kraftfahrzeug mit einem solchen Leuchtdiodenmodul. Schließlich betrifft die vorliegende Erfindung auch ein Verfahren zur Befestigung und Kontaktierung mindestens einer Leuchtdiode auf einem Trägerelement eines Leuchtdiodenmoduls einer Beleuchtungseinrichtung für ein Kraftfahrzeug.

Ein Leuchtdiodenmodul einer Beleuchtungsvorrichtung für ein Kraftfahrtzeug ist aus JP 2007 194173 A bekannt. Aus der DE 10 2007 028 097 A1 ist eine Beleuchtungseinrichtung mit Halbleiterlichtquellen in Form von Leuchtdioden bekannt. Diese Beleuchtungseinrichtung umfasst ein Leuchtdiodenmodul mit einer flexiblen Leiterplatte, auf der die Leuchtdioden angeordnet sind. Den Leuchtdioden zugeordnete Vorsatzoptiken und Kühlkörper zum Kühlen der Leuchtdioden sind als vom Leuchtdiodenmodul getrennte separate Teile ausgeführt. Die Konstruktion der bekannten Beleuchtungseinrichtung ist exakt an den Typ und die Eigenschaften der Leuchtdioden, insbesondere deren Abmessungen angepasst. Soll die Beleuchtungseinrichtung mit einem anderen Typ von Leuchtdiode verwendet werden, muss die Konstruktion der gesamten Beleuchtungseinrichtung geändert werden. Eine Änderung der Konstruktion kann insbesondere geänderte Abmessungen und eine geänderte Form der Leiterplatte, ein geändertes Layout (Verlauf der Leitungen und Kontaktierungspunkte) auf der Leiterplatte und/oder eine geänderte elektrische Ansteuerung der Leuchtdiode umfassen. Dies ist sehr aufwendig und mit einem relativ hohen Zeit- und Kostenaufwand verbunden.

Aufgabe der Erfindung ist es deshalb, die Befestigung von Leuchtdioden in einem Leuchtdiodenmodul einer Beleuchtungseinrichtung zu vereinfachen und vor allem zu standardisieren.

Diese Aufgabe wird durch ein Leuchtdiodenmodul mit den Merkmalen des Anspruchs 1, durch eine Beleuchtungseinrichtung mit den Merkmalen des Anspruchs 15 gelöst. Demnach schlägt die Erfindung ausgehend von dem Leuchtdiodenmodul bzw. der Beleuchtungseinrichtung der eingangs genannten Art vor, dass die mindestens eine Leuchtdiode auf einem Leitungsträger befestigt und kontaktiert ist und der Leitungsträger seinerseits an dem Trägerelement befestigt und kontaktiert ist.

Der Erfindung liegt die Überlegung zu Grunde, die Kraftfahrzeugbeleuchtungseinrichtung, insbesondere deren Leuchtdiodenmodul, modular aufzubauen, das heißt die Leuchtdiode nicht direkt oder unmittelbar an dem Trägerelement zu befestigen, sondern den Leitungsträger vorzusehen, auf der die Leuchtdiode angeordnet ist und die an das Trägerelement ein- oder mehrfach angebracht ist. Die Leuchtdiode wird also mittelbar über das Trägerelement an dem Trägerelement befestigt und kontaktiert. Mit dem Leitungsträger wird somit ein einheitliches und für unterschiedliche Typen von Leuchtdiodenmodulen standardisiertes Bauteil bereit gestellt, dessen äußeren Abmessungen, Befestigungs- und Kontaktierungspunkte zumindest weitgehend unabhängig vom Typ bzw. Hersteller der Leuchtdiode ist. Soll ein anderer Typ der Leuchtdiode oder sollen Leuchtdioden eines anderen Herstellers verwendet werden, genügt es, den Leitungsträger anzupassen. Eine Umkonstruktion der anderen Teile des Leuchtdiodenmoduls ist nicht erforderlich. Soll ein neuer Typ der Kraftfahrzeugbeleuchtungseinrichtung und/oder des Leuchtdiodenmoduls entwickelt werden, kann der standardisierte Leitungsträger verwendet werden.

Bedeutsam ist, dass die Befestigung und Kontaktierung der mindestens einen Leuchtdiode auf dem Leitungsträger vorzugsweise in Abhängigkeit vom Typ der Leuchtdiode erfolgt. Unterschiedliche Typen von Leuchtdioden können unter Umständen eine Umkonstruktion und Änderung des Leitungsträgers im Hinblick auf die Befestigung und Kontaktierung der mindestens einen Leuchtdiode erforderlich machen. Im Hinblick auf die Befestigung und Kontaktierung des Leitungsträgers an dem Trägerelement kann der Leitungsträger jedoch unverändert bleiben. Der Leitungsträger bildet also gewissermaßen eine standardisierte Schnittstelle für die Befestigung und Kontaktierung unterschiedlicher Leuchtdioden an einem Trägerelement eines Leuchtdiodenmoduls. Die Befestigungs- und Kontaktierungsstellen zwischen dem Leitungsträger und dem Trägerelement können standardisiert ausgebildet sein.

Dadurch wird auch die Konstruktion neuer Beleuchtungseinrichtungen bzw. deren Leuchtdiodenmodule im Bereich der Befestigung und Kontaktierung der Leuchtdioden standardisiert und damit erheblich vereinfacht.

Der Leitungsträger hat unabhängig von dem Typ der mindestens einen darauf befestigten und kontaktierten Leuchtdiode einen vorgegebenen Standardaufbau hinsichtlich Befestigung und Kontaktierung an dem Trägerelement, wobei das Trägerelement entsprechende Befestigungsmittel und Kontaktierungsmittel zur Befestigung und Kontaktierung des Leitungsträgers mit dem Standardaufbau aufweist. Verschiedene Leitungsträger mit einem Standardaufbau haben alle gleiche Abmessungen und gleiche Befestigungs- und Kontaktierungsmittel, damit sie auf die gleiche standardisierte Weise an einem Trägerelement befestigt und kontaktiert werden können (Gleichteile, Wiederholgeometrie und Wiederholverfahren zur Befestigung und Kontaktierung der Leitungsträger).

Der Leitungsträger weist unterschiedliche Befestigungs- und/oder Kontaktierungsmittel auf, mit denen er an dem Trägerelement befestigt und kontaktiert werden kann. Auf diese Weise kann bei der Konstruktion neuer Beleuchtungseinrichtungen bzw. deren Leuchtdiodenmodule im Bereich der Befestigung und Kontaktierung der Leuchtdioden zwischen verschiedenen Möglichkeiten gewählt werden. Der Konstrukteur kann sich für eine der durch den Leitungsträger vorgegebenen Befestigungs- und/oder Kontaktierungsarten entscheiden und an dem Trägerelement des Leuchtdiodenmoduls entsprechende Mittel vorsehen. Man erhält also trotz Verwendung standardisierter Leitungsträger eine größere Flexibilität bezüglich der Ausgestaltung der Befestigungs- und Kontaktierungsmittel auf dem Trägerelement.

Von Bedeutung für die Erfindung ist eine genaue und zuverlässige Positionierung des Leitungsträgers mit der mindestens einen Leuchtdiode an dem Trägerelement. Üblicherweise sind optische Elemente der Beleuchtungseinrichtung (z.B. Linsen, Reflektoren, etc.) an dem Trägerelement befestigt oder im Trägerelement integriert (einteilig mit diesem ausgebildet), so dass der Positionierung des Leitungsträgers an dem Trägerelement und damit der Leuchtdioden relativ zu den optischen Elementen eine große Bedeutung für die resultierende Lichtverteilung zukommt. Die Positionierung des Leitungsträgers relativ zum Trägerelement muss in allen drei Richtungen (x, y, z) eines kartesischen Koordinatensystems sichergestellt sein. Die Positionierung kann mittels geeigneter Positionierungsmittel an dem Leitungsträger und dem Trägerelement ausgeführt sein. So ist es bspw. denkbar, dass mindestens zwei an dem Trägerelement ausgebildete Positionierungsstifte in entsprechende Aussparungen in dem Leitungsträger greifen und der Leitungsträger mit den Aussparungen so weit auf die Positionierungsstifte aufgesetzt wird, bis ein vorgegebener Anschlag erreicht ist. Die Stifte können den Leitungsträger in zwei Richtungen positionieren, der Anschlag sorgt für eine Positionierung in der dritten Richtung. Die Positionierungsstifte können bspw. kegelförmig ausgebildet sein, was die Montage des Leitungsträgers am Trägerelement deutlich erleichtert.

Besonders bevorzugt ist es, wenn die Befestigung und die Kontaktierung des Leitungsträgers mit der mindestens einen Leuchtdiode auf dem Trägerelement in einem Arbeitsschritt erfolgt. So wäre es bspw. denkbar, dass durch Einklipsen des Leitungsträgers in das Trägerelement gleichzeitig auf dem Trägerelement ausgebildete Kontakte die entsprechenden Kontakte des Trägerelements kontaktieren. Die Kontaktierung kann durch die Klipsverbindung zwischen Leitungsträger und Trägerelement gesichert sein. Eine Vielzahl anderer Ausführungsbeispiele sind denkbar. In dem gleichen Arbeitsschritt wie die Befestigung und Kontaktierung des Leitungsträgers am Trägerelement könnte auch die Positionierung der beiden Bauteile relativ zueinander erfolgen. Somit wäre in einem Arbeitsschritt die genaue Positionierung der Leuchtdioden, sowie deren Befestigung und Kontaktierung im Leuchtdiodenmodul gewährleistet.

Das erfindungsgemäße Verfahren hat den Vorteil, dass abseits von der Montagelinie zur Montage des Leuchtdiodenmoduls bzw. der Beleuchtungseinrichtung die mindestens einen Leuchtdiode an dem Leitungsträger befestigt und kontaktiert werden kann. Dies ist somit unabhängig vom Arbeitstakt bei der Montage des Leuchtdiodenmoduls bzw. der Beleuchtungseinrichtung. Außerdem kann eine beliebige Anzahl an Leitungsträgern mit entsprechend befestigten und kontaktierten Leuchtdioden eines bestimmten Typs im Vorfeld der Montage des Leuchtdiodenmoduls bzw. der Beleuchtungseinrichtung gefertigt und bis zur Montage zwischengelagert werden. Idealerweise hält der Hersteller des Leuchtdiodenmoduls bzw. der Beleuchtungseinrichtung einen Vorrat verschiedener Leitungsträger mit unterschiedlichen Typen von Leuchtdioden vor und entnimmt zur Montage in einem bestimmten Leuchtdiodenmodul bzw. einer bestimmten Beleuchtungseinrichtung den gewünschten vormontierten Leitungsträger. Auch die automatisierte Montage und Kontaktierung der Leuchtdioden in dem Leuchtdiodenmodul mittels eines Industrieroboters oder eines anderen geeigneten Handhabungsgeräts wird durch die Erfindung erheblich erleichtert, da die komplizierte, typabhängige Befestigung und Kontaktierung der Leuchtdiode bereits im Vorfeld erfolgt ist. Im Rahmen der eigentlichen Montage des Leuchtdiodenmoduls bzw. der Beleuchtungseinrichtung muss lediglich noch der vormontierte Leitungsträger auf die standardisierte Weise an dem Trägerelement befestigt und kontaktiert werden. Die Befestigung und Kontaktierung kann derart ausgebildet sein, dass sie besonders schnell und einfach, insbesondere automatisiert ausgeführt werden kann.

Vorzugsweise weist der Leitungsträger genau eine Leuchtdiode auf. Es ist jedoch auch denkbar, dass zwei oder mehr Leuchtdioden auf dem Leitungsträger vorhanden sind. Es ist bevorzugt, dass der Leitungsträger in der Draufsicht eine rechteckige Form aufweist und dass die Befestigungsmittel mindestens eine Seite (z.B. eine Schmalseite), vorzugsweise zwei gegenüberliegende Seiten, des Leitungsträgers umfassen. Hierdurch kann der Leitungsträger besonders einfach, bspw. durch über die Seiten des Leitungsträgers greifende Rastnasen des Trägerelements, an dem Trägerelement befestigt werden. Eine als Lichtquelle verwendete Leuchtdiode besteht aus einem oder mehreren Licht emittierenden Halbleiterchips, die auf ein isolierendes Trägersubstrat aufgebracht und darauf befestigt und/oder kontaktiert sind. Jeder Licht emittierende Halbleiterchip kann mit einer farbkonvertierenden Phosphorschicht versehen sein. Die Leuchtdiode besitzt vorzugsweise eine Hauptabstrahlrichtung entlang einer Mittelsenkrechten.

Alternativ oder ergänzend hierzu kann vorgesehen werden, dass die Befestigungsmittel mindestens ein Befestigungsloch, vorzugsweise zwei oder vier Befestigungslöcher an verschiedenen Ecken des Leitungsträgers, aufweisen. Eine Befestigung des Leitungsträgers an dem Trägerelement mittels der Befestigungslöcher ist insbesondere dann von Vorteil, wenn eine Halterung des Leitungsträger an seinen Querseiten bei einer bestimmten Ausgestaltung des Trägerelements aufwändig zu realisieren wäre.

Ferner ist bevorzugt, dass der Leitungsträger Kontaktierungsmittel zum elektrischen Verbinden einer auf dem Leitungsträger angeordneten die Leuchtdiode umfassenden Schaltung mit dem Trägerelement aufweist. Hierdurch wird nicht nur eine einheitliche mechanische Verbindung zum Trägerelement sondern auch eine einheitliche, vom Typ der Leuchtdiode unabhängige elektrische Verbindung der Leuchtdiode mit dem Trägerelement bereitgestellt.

Die Kontaktierungsmittel können auf beliebige Art und Weise ausgeführt sein. Bevorzugt ist jedoch, dass die sie mindestens ein Steckelement, mindestens eine Lötfläche und/oder mindestens eine Kontaktfläche umfassen.

Auf dem Leuchtdiodenmodul befindet sich eine Kodierelektronik zur dauerhaften Speicherung der optischen Eigenschaften, wie zum Beispiel Lichtstrom oder Lichtfarbe, der Leuchtdioden für die Ansteuerelektronik.

Auf einem Schaltungsträger des Leuchtdiodenmoduls sind einzelne elektronische Bauteile oder elektronische Baugruppen angeordnet, bspw. die Ansteuerelektronik der LED-Lichtquellen oder Teile davon.

Der Aufbau (z.B. Abmessungen, Form, optische Eigenschaften) einer sogenannten Vorsatzoptik, das heißt von optisch wirksamen Bauteilen zum Beeinflussen des von der Leuchtdiode erzeugten Lichts, muss in manchen Fällen an die Eigenschaften der Leuchtdiode besonders präzise angepasst sein. Insbesondere in solchen Fällen erweist es sich als vorteilhaft, wenn mindestens ein optisch wirksames Element, vorzugsweise mindestens ein Reflektor und/oder mindestens eine Vorsatzlinse, zum Beeinflussen des von der Leuchtdiode abgegebenen Lichts direkt an dem Leitungsträger angeordnet und befestigt ist.

Um den Leitungsträger in das Leuchtdiodenmodul leicht einbauen zu können, ist in einer bevorzugten Ausführungsform der Erfindung vorgesehen, dass das Trägerelement Aufnahmemittel zum Halten des Leitungsträgers an dem Trägerelement aufweist, wobei die Aufnahmemittel mit Befestigungsmitteln des Leitungsträgers zusammenwirken. Die Aufnahmemittel können weitgehend frei ausgestaltet werden, es ist jedoch bevorzugt, dass die Aufnahmemittel und die Befestigungsmittel zusammen eine Rastverbindung, eine Bajonettverbindung, eine Klemmverbindung, eine Klebeverbindung, eine Schraubverbindung und/oder ein Schweißverbindung bilden.

Um die elektrische Verbindung zwischen dem Leitungsträger und dem Trägerelement einfach herstellen zu können und um das Trägerelement mit geringem Aufwand fertigen zu können, wird vorgeschlagen, dass das Trägerelement mindestens eine Kontaktbahn zum Kontaktieren von Kontaktierungsmitteln des Leitungsträgers aufweist, so dass eine elektrische Verbindung zwischen der Leuchtdiode und dem Trägerelement hergestellt werden kann.

Der Leitungsträger kann als eine starre oder flexible Leiterplatte ausgebildet sein. Auf dieser wird die mindestens eine Leuchtdiode aufgesetzt, positioniert, befestigt und mit auf der Leiterplatte ausgebildeten Leiterbahnen elektrisch kontaktiert. Die Leiterbahnen münden in die auf dem Leitungsträger vorgesehenen Kontaktierungsmittel, über die der Leitungsträger an dem Trägerelement kontaktiert werden kann.

Um eine einfache Montage des Leitungsträgers am Trägerelement zu ermöglichen, kann vorgesehen werden, dass die Kontaktierungsmittel, insbesondere die Kontaktflächen, an einer Seite, vorzugsweise an einer Schmalseite, des Leitungsträgers angeordnet sind und die Befestigungsmittel an einer dieser Seite gegenüberliegenden weiteren Seite des Leitungsträgers angeordnet sind. Bei den Befestigungsmitteln handelt es sich vorzugsweise um die Befestigungslöcher oder um die weitere Seite selbst. Der Leitungsträger wird somit an der einen Seite mittels der Kontaktierungsmittel, vorzugsweise mittels Kontaktenden der Kontaktbahnen, und an der gegenüberliegenden Seite beispielsweise mittels Schrauben oder Rasthaken gehalten. In diesem Fall übernehmen die Kontaktierungsmittel also gleichzeitig eine Halte- oder Befestigungsfunktion.

Um den Fertigungsaufwand für das Trägerelement weiter zu reduzieren, kann vorgesehen werden, dass das Trägerelement aus Kunststoff gebildet ist und die mindestens eine Kontaktbahn in das Trägerelement eingebracht ist oder vom Trägerelement umspritzt ist. Die Kontaktbahn kann in das Trägerelement eingebracht werden, indem sie eingesteckt oder mit dem Trägerelement verprägt wird. Es können Spritzgussverfahren zum Herstellen elektrisch miteinander verbundener eingegossener Teile (engl. Moulded Interconnect Devices, MID) angewendet werden. Bei den Spritzgießverfahren kann es sich beispielsweise um Einkomponentenverfahren oder Zweikomponentenverfahren handeln.

Vorzugsweise weist das Trägerelement einen Kühlkörper zum Kühlen der Leuchtdiode auf. Der Kühlkörper kann - je nach genauer Ausgestaltung des Leuchtdiodenmoduls bzw. der Beleuchtungseinrichtung - vom Trägerelement umspritzt sein und/oder in eine Öffnung des Trägerelements eingesetzt sein. Hierbei kann vorgesehen werden, dass eine Auflagefläche des Kühlkörpers an einer Unterseite des an das Trägerelement angebrachten Leitungsträgers anliegt, sodass beim Betrieb der Leuchtdiode Wärme von der Leuchtdiode über den Leitungsträger zum Kühlkörper geleitet wird. Alternativ kann der Kühlkörper auch an dem Leitungsträger befestigt sein, vorzugsweise auf einer der Leuchtdiode abgewandten Seite des Leitungsträgers, wobei dann für eine gute Wärmeleitung von der Leuchtdiode zu dem Kühlkörper gesorgt werden muss. Dies kann bspw. dadurch erfolgen, dass bspw. eine Metallkernplatine oder eine starre Leiterplatte mit auf der Rückseite durchkontaktierten (durch Löcher in der Leiterplatte hindurch) Kupferbahnen verwendet wird.

Vorzugsweise sind zwei oder mehr Leitungsträger auf dem Trägerelement befestigt und kontaktiert. Besonders bevorzugt handelt es sich dabei und gleichartige Leitungsträger, wobei sich die Gleichartigkeit insbesondere auf die Abmessungen, die Form und/oder die elektrischen Eigenschaften von auf den Leitungsträgern angeordneten Leuchtdioden bezieht.

Besonders bevorzugt ist, wenn das Trägerelement der mindestens einen Leuchtdiode zugeordnete integrierte optisch wirksame Elemente aufweist. Als optisch wirksame Elemente kommen bspw. ein Reflektor, eine Linse oder eine Vorsatzoptik in Betracht. Eine Vorsatzoptik besteht aus einem optisch transparenten Material und weist totalreflektierende Eigenschaften auf. Das in die Vorsatzoptik eingekoppelte Licht wird mindestens einmal mittels Totalreflexion reflektiert, was zu einer Bündelung der Lichtstrahlen führt.

Des weiteren wird vorgeschlagen, dass das Trägerelement integrierte Leiterbahnen aufweist. Die Leiterbahnen können bspw. in das Material des Trägerelements eingespritzt sein.

Schließlich wird vorgeschlagen, dass das Trägerelement als eine optisch transparente Lichtscheibe ausgebildet ist. In diese können die Leitungsträger mit den darauf befestigten und kontaktierten Leuchtdioden bspw. von unten eingesetzt werden, so dass das von den Leuchtdioden ausgesandte Licht durch das transparente Material des Trägerelements hindurchtritt. An der Durchtrittsstelle des Lichts durch das transparente Material des Trägerelements kann eine Vorsatzoptik zum Bündeln der ausgesandten Lichtstrahlen oder für eine anderweitige Strahlformung in die Lichtscheibe integriert sein.

Weitere Merkmale und Vorteile der Erfindung ergeben sich aus der nachfolgenden Beschreibung, in welcher exemplarische Ausführungsformen der Erfindung anhand der Zeichnungen näher erläutert werden. Dabei zeigen:
- Figur 1: eine perspektivische Ansicht einer Kraftfahrzeugbeleuchtungseinrichtung mit einem Leuchtdiodenmodul gemäß einer ersten bevorzugten Ausführungsform;
- Figur 2: eine perspektivische Ansicht eines Leitungsträgers der Beleuchtungseinrichtung aus Figur 1;
- Figur 3: eine perspektivische Ansicht eines Leitungsträgers gemäß einer zweiten bevorzugten Ausführungsform;
- Figur 4: eine perspektivische Ansicht eines Leitungsträgers gemäß einer dritten bevorzugten Ausführungsform;
- Figur 5: eine geschnittene Seitenansicht eines Leuchtdiodenmoduls gemäß einer vierten bevorzugten Ausführungsform mit in ein Trägerelement integrierten Kontaktbahnen;
- Figur 6: eine geschnittene Seitenansicht eines Leuchtdiodenmoduls gemäß einer fünften Ausführungsform mit einem in das Trägerelement integrierten Reflektor;
- Figur 7: eine geschnittene Seitenansicht eines Leuchtdiodenmoduls gemäß einer sechsten Ausführungsform mit einem in das Trägerelement integrierten Reflektor;
- Figur 8: eine geschnittene Seitenansicht eines Leuchtdiodenmoduls mit Kühlkörper gemäß einer siebten bevorzugten Ausführungsform;
- Figur 9: eine geschnittene Seitenansicht eines Leuchtdiodenmoduls gemäß einer achten bevorzugten Ausführungsform mit Kühlkörper und einer Kontaktbahn zum Kontaktieren des Leitungsträgers;
- Figur 10: eine perspektivische Vorderansicht eines Leuchtdiodenmoduls gemäß einer neunten bevorzugten Ausführungsform mit in das Trägerelement integrierten Vorsatzoptik und eine in das Trägerelement integrierten Lichtscheibe;
- Figur 11: eine perspektivische Rückansicht des Leuchtdiodenmoduls aus Figur 10;
- Figur 12: eine geschnittene Seitenansicht der Darstellung aus Figur 11;
- Figur 13: eine perspektivische Ansicht von oben auf ein weiteres Ausführungsbeispiel eines Leitungsträgers des erfindungsgemäßen Lichtmoduls; und
- Figur 14: eine perspektivische Ansicht von unten auf den Leitungsträger aus Figur 13.

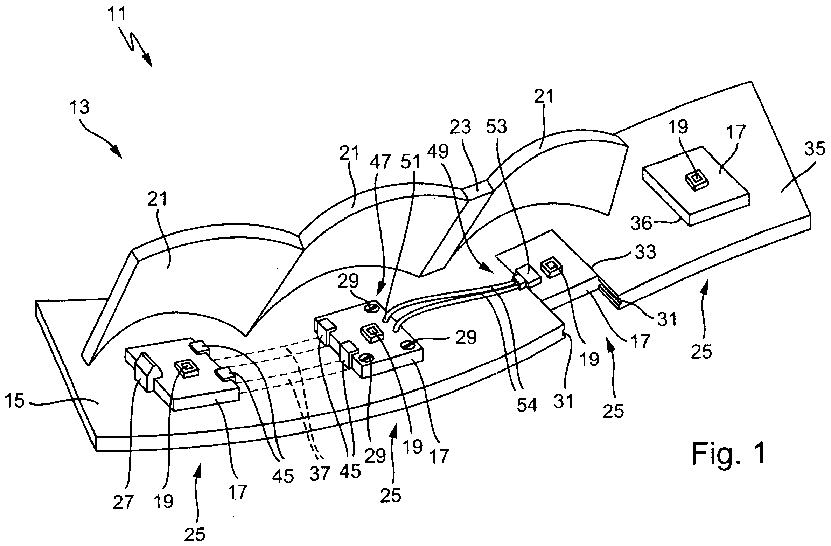

Eine erfindungsgemäße Kraftfahrzeugbeleuchtungseinrichtung umfasst ein in Figur 1 dargestelltes Leuchtdiodenmodul 13. Die Beleuchtungseinrichtung umfasst bspw. ein Gehäuse, in dem das Modul 13 angeordnet und befestigt ist. Das Gehäuse weist in Lichtaustrittsrichtung eine Lichtaustrittsöffnung auf, die durch eine transparente Abdeckscheibe mit oder ohne optisch wirksamer Profile verschlossen ist. Außer einem Leuchtdiodenmodul 13 können noch weitere Leuchtdiodenmodule 13 und/oder andere Lichtmodule (bspw. mit Glühlampen oder Gasentladungslampen) in dem Gehäuse angeordnet sein. Außerdem kann die Beleuchtungseinrichtung als ein Scheinwerfer oder als eine Leuchte ausgebildet sein. Es ist auch denkbar, dass in die als Scheinwerfer ausgebildete Beleuchtungseinrichtung eine Leuchte (z.B. Blinkleuchte oder Tagfahrleuchte) integriert ist.

Bei der in Figur 1 gezeigten Ausführungsform umfasst die Kraftfahrzeugbeleuchtungseinrichtung ein Leuchtdiodenmodul 13. Selbstverständlich kann die Beleuchtungseinrichtung auch mehrere Leuchtdiodenmodule 13 aufweisen. Die Kraftfahrzeugbeleuchtungseinrichtung kann zum Erzeugen von Licht gemäß einer beliebigen Lichtfunktion eingerichtet sein. Bei der Kraftfahrzeugbeleuchtungseinrichtung kann es sich beispielsweise um eine Tagfahrleuchte, eine Blinkleuchte oder einen Scheinwerfer handeln.

Das Leuchtdiodenmodul 13 weist ein Trägerelement 15 auf, an dem mehrere Leitungsträger 17 befestigt sind. Selbstverständlich kann das Modul 13 auch lediglich einen Leitungsträger 17 aufweisen. Jeder Leitungsträger 17 ist mit einer Leuchtdiode 19 bestückt, die eine Lichtquelle der Kraftfahrzeugbeleuchtungseinrichtung bildet. In der gezeigten Ausführungsform handelt es sich bei den Leitungsträgern 17 um Leiterplatten, die bspw. aus Leiterplattenmaterial mit der standardisierten Bezeichnung "FR4" hergestellt sind (üblicherweise mittels Glasfasergewebe verstärktes Epoxidharz). Abweichend von der gezeigten Ausführungsform können andere Materialien, Formen, Konturen, Abmessung etc. für die Leiterplatte 17 vorgesehen werden. Der Leitungsträger 17 könnte beispielsweise auch als eine Metallkernplatine ausgebildet sein. Ebenso kann die Leiterplatte 17 starr oder flexibel ausgebildet sein. Prinzipiell kann es sich bei den Leitungsträgern 17 um jede Art von plattenförmigen Schaltungsträgern handeln. Abweichend von den gezeigten Ausführungsformen können die Leitungsträger 17 auch mit mehreren Leuchtdioden 19 bestückt sein.

Eine als Lichtquelle verwendete Leuchtdiode 19 besteht aus einem oder mehreren Licht emittierenden Halbleiterchips, die auf ein isolierendes Trägersubstrat aufgebracht und darauf befestigt und/oder kontaktiert sind. Jeder Licht emittierende Halbleiterchip kann mit einer farbkonvertierenden Phosphorschicht versehen sein. Die Leuchtdiode 19 besitzt vorzugsweise eine Hauptabstrahlrichtung entlang einer Mittelsenkrechten. Entlang einer dieser Hauptabstrahlrichtung entsprechenden Achse kann mindestens ein optisches Bauteil, wie zum Beispiel eine Vorsatzoptik, eine Linse oder ein Reflektor, angeordnet sein. Der Leitungsträger 17 erstreckt sich vorzugsweise in einer senkrecht zu der Hauptabstrahlrichtung der Leuchtdiode 19 verlaufenden Ebene. Vorzugsweise verläuft die Hauptabstrahlrichtung parallel, besonders bevorzugt im Wesentlichen deckungsgleich mit der optischen Achse der Leuchtdiode 19.

Auf dem Leuchtdiodenmodul 13 kann sich eine Kodierelektronik zur dauerhaften Speicherung der optischen Eigenschaften, wie zum Beispiel Lichtstrom oder Lichtfarbe, der Leuchtdioden 19 für die Ansteuerelektronik befinden.

Auf einem Schaltungsträger des Leuchtdiodenmoduls 13 können einzelne elektronische Bauteile oder elektronische Baugruppen angeordnet sein, bspw. die Ansteuerelektronik der LED-Lichtquellen 19 oder Teile davon.

Zur Realisierung einer Leuchtweitenregelung (LWR) könnte das Trägerelement 15 in seiner Gesamtheit oder teilweise um eine im Wesentlichen horizontale Drehachse in einem Scheinwerfergehäuse, in dem das Leuchtdiodenmodul 13 angeordnet ist, schwenkbar gelagert sein.

An dem Trägerelement 15 sind Reflektoren 21 zum Reflektieren von von den Leuchtdioden 19 abgegebenem Licht angeordnet, wobei zumindest einem Teil der Leuchtdioden 19 jeweils ein Reflektor 21 zugeordnet ist. In der in Figur 1 gezeigten Ausführungsform ist jeder der drei linken Leuchtdioden 19 ein Reflektor 21 zugeordnet, wohingegen der in der Darstellung von Figur 1 ganz rechts angeordneten Leuchtdiode 19 kein eigener Reflektor 21 zugeordnet ist. Diese kann entweder einem am Gehäuse der Beleuchtungseinrichtung oder anderweitig angeordneten Reflektor zugeordnet sein oder aber keinen Reflektor benötigen oder andere reflektierende Bauteile der Beleuchtungseinrichtung, bspw. einen der Reflektoren 21, zur Reflexion der Lichtstrahlen nutzen. Die Reflektoren 21 sind an dem Trägerelement 15 angespritzt, sodass das Trägerelement 15 und die Reflektoren 21 einstückig ausgebildet sind und ein einziges Kunststoffteil bilden. Benachbarte Reflektoren 21 können direkt oder über einen Verbindungsabschnitt 23 miteinander verbunden sein. Selbstverständlich können die Reflektoren 21 auch separat von dem Trägerelement 15 ausgebildet sein. Ebenso können sie auch einzeln, das heißt freistehend ohne miteinander verbunden zu sein, an dem Trägerelement 15 angeordnet sein (nicht gezeigt).

Das Trägerelement 15 kann Aufnahmemittel 25 in Form eines oder mehrerer Rasthaken 27, mittels deren die einzelnen Leitungsträger 17 an das Trägerelement 15 festgeklipst sind, aufweisen. Die Aufnahmemittel 25 können auch durch Schrauben 29 gebildet sein, die durch entsprechende Befestigungslöcher des Leitungsträgers 17 geführt sind und an das Trägerelement 15 festgeschraubt sind, sodass die Leitungsträger 17 am Trägerelement 15 fixiert sind. Anstelle der Schrauben 29 können auch Nieten oder dergleichen vorgesehen werden. Denkbar ist auch, eine Bajonettverbindung zwischen zumindest einem Leitungsträger 17 und dem Trägerelement 15 vorzusehen.

In der gezeigten Ausführungsform sind auch Aufnahmemittel 25 in Form zweier parallel zueinander angeordneter, in das Trägerelement 15 eingeformter Nuten 31 vorgesehen, in die einer der Leitungsträger 17 eingeschoben ist, sodass die Nuten 31 den Leitungsträger 17 an gegenüberliegenden Seiten 33 halten. Ein weiterer Leitungsträger 17 ist an seiner Unterseite 36 an einer Oberseite 35 des Trägerelements 15 festgeklebt. In diesem Fall bilden ein Abschnitt der Oberseite 35, insbesondere eine Vertiefung in der Oberseite 35, und eine zwischen der Oberseite 35 und der Unterseite 36 des Leitungsträgers 17 vorhandene Klebstoffschicht die Aufnahmemittel 25. Abweichend hiervon kann zumindest einer der Leitungsträger 17 auch an das Trägerelement 15 festgeschweißt sein.

Um eine möglichst genaue Positionierung des Leitungsträgers 17 relativ zu dem Trägerelement 15 und damit auch der Leuchtdioden 19 relativ zu den Reflektoren 21 zu erzielen, ist es denkbar, dass geeignete Positionierungsmittel an dem Trägerelement 15 und/oder dem Leitungsträger 17 vorgesehen sind. Diese können bspw. den Rand einer Aussparung in der Oberseite 35 des Trägerelements 15 umfassen, in welche der Leitungsträger 17 eingesetzt werden kann. Der äußere Rand des Leitungsträgers 17 würde dann durch den Rand der Aussparung in Position gehalten. Ebenso wäre es denkbar, dass auf der Oberseite 35 des Trägerelements 15 Positionierungsstifte oder ähnliches vorgesehen sind, die in eine oder mehrere Bohrungen 57 des Leitungsträgers 17 eingreifen.

Um eine elektrische Verbindung zwischen dem Trägerelement 15 und den Leitungsträgern 17, insbesondere den darauf angeordneten Leuchtdioden 19, und/oder zwischen den einzelnen Leitungsträgern 17 herzustellen, weist das Trägerelement 15 eine oder mehrere Kontaktbahnen 37 auf, die elektrische Leiter bilden. In der gezeigten Ausführungsform sind benachbarte Leitungsträger 17 mit jeweils zwei elektrischen Leitern verbunden, sodass zwischen dem ganz linken Leitungsträger 17 und dem ihm benachbarten zweiten Leitungsträger 17 zwei Kontaktbahnen 37 angeordnet sind, die in das Kunststoffmaterial, aus dem das Trägerelement 15 gebildet ist, eingebettet sind.

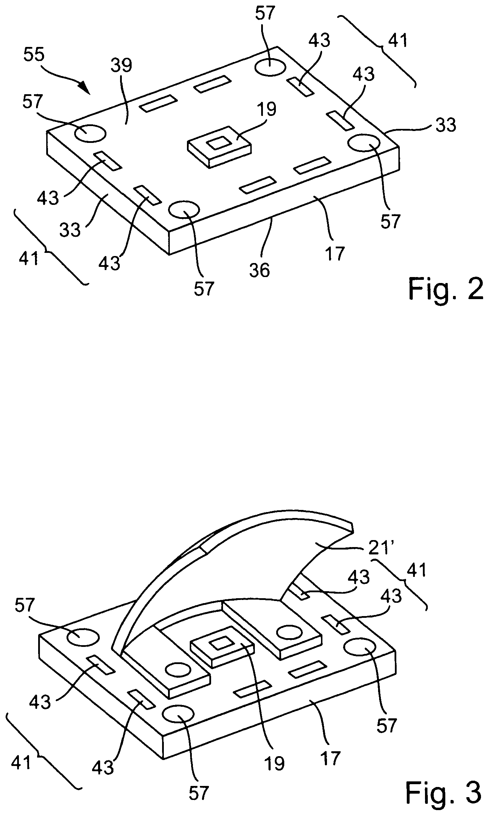

Wie aus Figur 2 ersichtlich ist, wie der zweite Leitungsträger 17 zeigt, weist dieser Leitungsträger 17 an einer Oberseite 39, an der auch die Leuchtdiode 19 angeordnet ist, Kontaktierungsmittel 41 in Form von Kontaktflächen 43 auf. Ist der Leitungsträger 17 an das Trägerelement 15 angebracht bzw. daran befestigt, dann drücken Kontaktenden 45 der Kontaktbahnen 37 gegen die Kontaktflächen 43, um die elektrische Verbindung herzustellen (siehe Figur 1). Weitere Kontaktierungsmittel in Form weiterer Kontaktflächen können auch an der Längsseite des Leitungsträgers 17 vorgesehen sein. Die Leuchtdiode 19 ist vorzugsweise derart an dem Leitungsträger 17 befestigt und kontaktiert, dass die Leuchtdiode 19 über ein Kontaktflächenpaar einer beliebigen Seite des Leitungsträgers 17 mit Energie versorgt werden kann. Somit wäre also auch eine Kontaktierung über die Kontaktflächen an der Längsseite des Leitungsträgers 17 denkbar.

Anstelle der Kontaktbahnen 37 oder ergänzend zu den Kontaktbahnen 37 kann zur elektrischen Verbindung auch eine Lötverbindung 47 oder eine Steckverbindung 49 vorgesehen werden. In diesem Fall weist der entsprechende Leitungsträger 17 als Kontaktierungsmittel 41 Lötaugen oder Lötflächen 51 bzw. ein Steckelement 53 der Steckverbindung 49 auf. Im Falle der Lötverbindung 47 und/oder der Steckverbindung 49 sind als elektrische Leiter zwei Kabel 54 zum elektrischen Anschluss des Leitungsträgers 17, vorzugsweise zum elektrischen Verbinden des Leitungsträgers 17 miteinander, vorgesehen.

In der gezeigten Ausführungsform sind zwei oder vier elektrische Leiter (Kontaktbahnen 37 oder Kabel 54) an den Leitungsträger 17 angeschlossen. In anderen Ausführungsformen kann eine andere Anzahl von Leitern vorgesehen werden, die mit einem bestimmten Leitungsträger 17 verbunden sind.

Man erkennt, dass die in Figur 2 gezeigten Leitungsträger 17 Befestigungsmittel 55 in Form von Befestigungslöchern 57 aufweist, die sich in der Nähe der Ecken des Leitungsträgers 17 befinden. Des Weiteren bilden auch gegenüberliegende Schmalseiten 33 oder die von der Oberseite 39 abgewandte Unterseite 36 des Leitungsträgers 17 Befestigungsmittel 55. Je nach Ausgestaltung der Befestigungsmittel 55 wird der Leitungsträger 17 an den Seiten 33 von den Nuten 31 des Trägerelements 15 gehalten oder an ihrer Unterseite 36 auf das Trägerelement 15 festgeklebt.

Eine weitere Ausführungsform des Leitungsträgers 17 ist in Figur 3 dargestellt. An diesem Leitungsträger 17 ist zusätzlich ein optisch wirksames Element in Form eines Reflektors 21' angeordnet. Der Reflektor 21' kann auf dem Leitungsträger 17 festgenietet, festgeschraubt, festgeklebt, festgeschweißt oder auf eine andere Weise mit dem Leitungsträger 17 verbunden sein. Es wäre auch denkbar, dass der Reflektor 21' einstückig mit dem Leitungsträger 17 hergestellt ist. Bei dieser Ausführungsform kann auf einen hochgenaue Positionierung des Leitungsträgers 17 relativ zum Trägerelement 15 verzichtet werden, da der Bezug zwischen Leuchtdiode 19 und Reflektor 21' bereits auf dem Leitungsträger 17 selbst festgelegt ist.

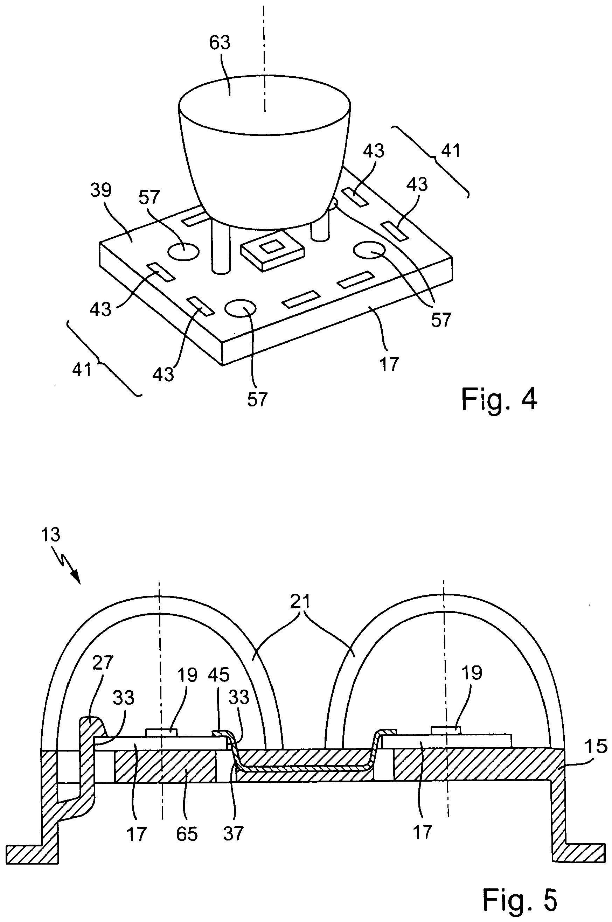

Wie in Figur 4 dargestellt, kann anstelle des Reflektors 21' auf dem Leitungsträger 17 auch ein anderes optisch wirksames Element, bspw. in Form einer Vorsatzoptik aus transparentem Material mit totalreflektierenden Eigenschaften, zum Beeinflussen, insbesondere zum Bündeln, des von der Leuchtdiode 19 ausgesandten Lichts vorgesehen sein. In der gezeigten Ausführungsform ist die Vorsatzoptik als eine Vorsatzlinse 63 ausgebildet. Die Vorsatzlinse 63 kann beispielsweise mittels Nieten, Schrauben, Kleben oder Schweißen an dem Leitungsträger 17 befestigt sein. Es ist aber auch denkbar, dass die Vorsatzoptik 63 einstückig mit dem Leitungsträger 17 hergestellt ist.

Figur 5 zeigt eine weitere Ausführungsform, bei der - ähnlich wie bei dem in Figur 1 gezeigten Leuchtdiodenmodul 13 - die Reflektoren 21 an dem Trägerelement 15 ausgebildet oder in dieses integriert sind. Man erkennt, dass der in Figur 5 links dargestellte Leitungsträger 17 an einer seiner Querseiten 33 von dem Kontaktende 45 der Kontaktbahn 37 und an der dieser Schmalseite 33 gegenüberliegenden Schmalseite 33 von dem Rasthaken 27 mit dessen Rastnase auf dem Trägerelement 15 gehalten wird. Der Leitungsträger 17 lässt sich relativ schnell montieren, indem er zunächst mit der erstgenannten Schmalseite 33 in einen Bereich zwischen einer Grundplatte 65 des Trägerelements 15 und dem Kontaktende 45 eingeschoben wird und dann die andere gegenüberliegende Schmalseite 33 mit dem Rasthaken 27 verrastet wird, sodass die gegenüberliegende Schmalseite 33 zwischen dem Rasthaken 27 und der Grundplatte 65 eingeklemmt ist.

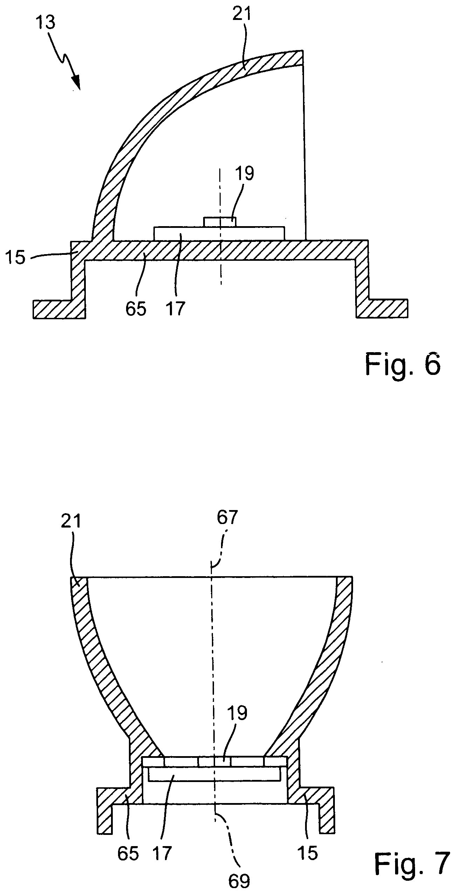

Bei der in Figur 6 gezeigten weiteren Ausführungsform der Beleuchtungseinrichtung ist der Reflektor 21 in das Trägerelement 15 integriert. Er ist an die Grundplatte 65 des Trägerelements 15 angespritzt, sodass das Trägerelement 15 samt Grundplatte 65 und Reflektor 21 ein einziges Kunststoffteil bildet. Der Leitungsträger 17 ist auf die Grundplatte 65 aufgeklebt, kann jedoch auch auf andere Weise, beispielsweise durch Schrauben oder Nieten, an der Grundplatte 65 befestigt sein.

Figur 7 zeigt eine Ausführungsform, bei der der an die Grundplatte 65 angespritzte Reflektor 21 eine rotationssymmetrische Form bezüglich einer Symmetrieachse 67 aufweist, wobei die Symmetrieachse 67 des Reflektors 21 einer Mittelachse 69 der Leuchtdiode 19 zumindest im Wesentlichen entspricht.

Bei den Ausführungsformen, bei denen in das Trägerelement 15 optisch wirksame Bauteile (beispielsweise der Reflektor 21 oder eine Vorsatzoptik) integriert sind, kann vorgesehen werden, dass der Leitungsträger 17 vorzugsweise in einer lateralen Richtung, das heißt innerhalb einer Ebene, in die Oberseite 39 oder die Unterseite 36 des Leitungsträgers 17 liegt, justierbar ist. Hierdurch können die optisch wirksamen Bauteile und die Leuchtdiode 19 trotz eventueller Fertigungstoleranzen in einen vorgegebenen räumlichen Bezug zueinander zur Erzeugung einer gewünschten Lichtverteilung gebracht werden.

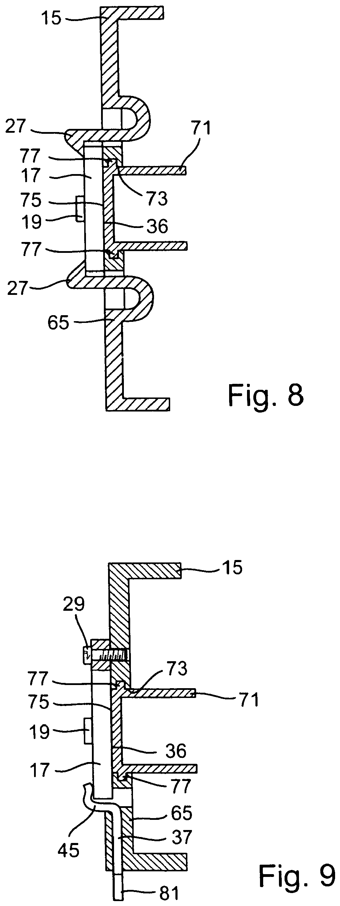

Bei den in den Figuren 8 und 9 gezeigten Ausführungsformen sind in das Trägerelement 15 des Leuchtdiodenmoduls 13 Kühlkörper 71 zum Kühlen des Leitungsträgers 17, insbesondere der sich darauf befindenden Leuchtdioden 19, beim Betrieb der Leuchtdioden 19 integriert. Der Kühlkörper 71 ist von der Grundplatte 65 des Trägerelements 15 umspritzt, sodass er in einer Öffnung 73 der Grundplatte 65 derart gehalten ist, dass eine Auflagefläche 75 des Kühlkörpers 71 gegen die Unterseite 36 des an das Trägerelement 15 montierten Leitungsträgers 17 drückt. Hierbei verhindert ein Verankerungsprofil 77 des Kühlkörpers 71, das in Längsrichtung der Grundplatte 65 von dem Kühlkörper 71 absteht und in die Grundplatte 65 hineinragt, dass der Kühlkörper 71 aufgrund einer Anpresskraft zwischen der Unterseite 36 des Leitungsträgers 17 und der Auflagefläche 75 aus der Öffnung 73 herausgeschoben wird.

Der in Figur 8 gezeigte Leitungsträger 17 wird mit den Rasthaken 27 an dem Trägerelement 15 gehalten, wohingegen der in Figur 9 gezeigte Leitungsträger 17 an einer Schmalseite 33 von den Kontaktenden 45 und an einer dieser Schmalseite 33 gegenüberliegenden Schmalseite 33 mittels der Schrauben 29 an dem Trägerelement 15 gehalten wird. Die in Figur 9 gezeigte Kontaktbahn 37 weist an einem von dem Kontaktende 45 abgewandtem weiteren Ende einen Steckanschluss 81 auf, der den elektrischen Anschluss des Leuchtdiodenmoduls 13 beispielsweise an eine Spannungs- oder Stromquelle zum Betreiben der Kraftfahrzeugbeleuchtungseinrichtung erlaubt.

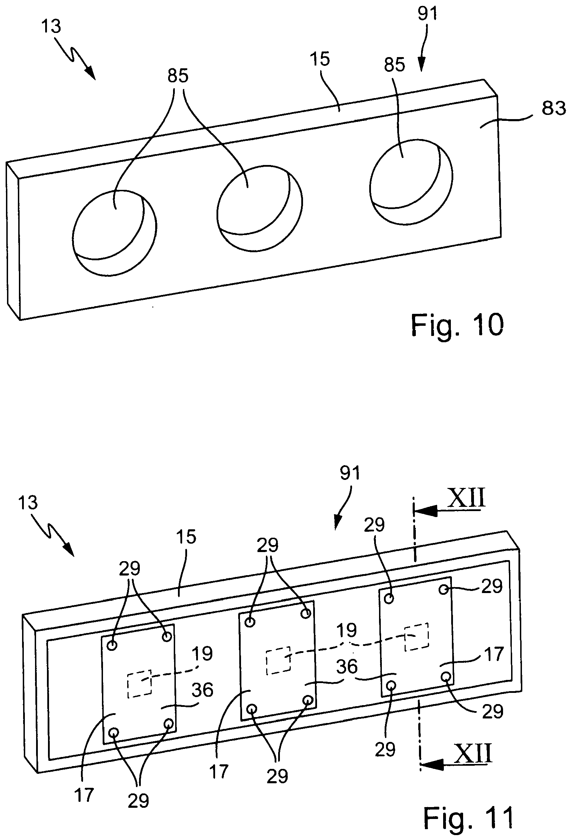

Im Folgenden wird anhand der Figuren 10 bis 12 eine weitere Ausführungsform der Beleuchtungseinrichtung beschrieben. Gemäß dieser Ausführungsform bilden eine Lichtscheibe 83 des Leuchtdiodenmoduls 13, in die Lichtscheibe 83 eingeformte optisch wirksame Elemente in Form weiterer Vorsatzlinsen 85 ein einziges Bauteil, das zugleich das Trägerelement 15 darstellt. Die weiteren Vorsatzlinsen 85 dieser Ausführungsform unterscheiden sich von der in Figur 4 gezeigten Vorsatzlinse 63 dadurch, dass sie in das Trägerelement 15 integriert sind, wohingegen die in Figur 4 gezeigte Vorsatzlinse an der Oberseite 39 des Leitungsträgers 17 angeordnet ist.

Aus der in Figur 11 dargestellten Rückansicht ist ersichtlich, dass der Leitungsträger 17 von hinten, das heißt an einer von der Lichtscheibe 83 und der Leuchtdioden 19 abgewandten Seite des Trägerelements 15, an das Trägerelement 15 mittels der Schrauben 29 angebracht sind. Hierbei ist jeder auf den Leitungsträgern 17 angeordneten Leuchtdiode 19 jeweils eine Vorsatzlinse 85 zugeordnet. Die Leitungsträger 17 können bei nicht vollständig angezogenen Schrauben 29 schwimmend, das heißt mit einem geringen Spiel innerhalb einer Ebene, in der die Unterseite 36 liegt, an dem Trägerelement 15 angebracht sein. Hierdurch kann die Lage der Leitungsträger 17 bezüglich der Vorsatzlinsen 85 durch seitliches Verschieben der Leitungsträger 17 während der Montage justiert werden. In der eingestellten Position wird der Leitungsträger 17 dann vor dem bestimmungsgemäßen Betrieb des Leuchtdiodenmoduls 13 an dem Trägerelement 15 festgelegt.

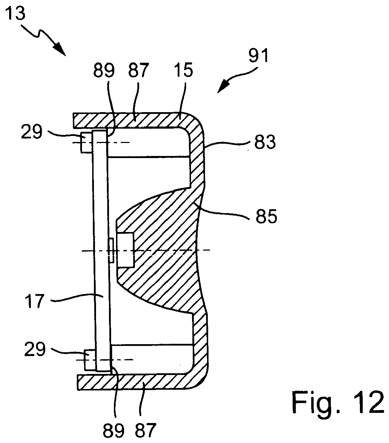

Wie aus Figur 12 ersichtlich ist, weist das Trägerelement 15 eine im Querschnitt insgesamt wannenartige Grundform auf, wobei am Boden dieser Wanne, das heißt an der Lichtscheibe 83, die Vorsatzlinsen 85 angespritzt sind und in einen inneren Bereich der Wanne ragen. An Seitenwänden 87 des Trägerelements 15 sind Befestigungsabsätze 89 angeordnet, an denen die Leitungsträger 17 anliegen, wobei sie von den Schrauben 29 gehalten werden. Aufgrund der wannenartigen Form bildet das Trägerelement 15 auch einen Teil eines Gehäuses 91 des Leuchtdiodenmoduls 13. Umfasst die Beleuchtungseinrichtung lediglich ein Leuchtdiodenmodul 13, dann bildet das Trägerelement 15 zugleich ein Teil des Gehäuses 91 der gesamten Beleuchtungseinrichtung.

In einer nicht gezeigten Ausführungsform sind das Trägerelement 15 und die Lichtscheibe 83 mit integrierten optisch wirksamen Elementen, insbesondere den Vorsatzlinsen 85 als zwei getrennte Bauteile ausgeführt.

In den gezeigten Ausführungsformen ist das Trägerelement 15 samt den in das Trägerelement 15 integrierten Teilen wie beispielsweise die Reflektoren 21, die Lichtscheibe 83 oder die Vorsatzlinsen 85 als ein mittels Spritzgießen hergestelltes Kunststoffteil ausgeführt. Je nach genauer Ausgestaltung des Trägerelements 15 können unterschiedliche Spritzgussverfahren angewendet werden. Es kann insbesondere ein Einkomponenten-Spritzgussverfahren oder ein Zweikomponenten-Spritzgussverfahren eingesetzt werden. Im Falle des Zweikomponenten-Spritzgussverfahrens kann es zweckmäßig sein, für beide Komponenten dasselbe Kunststoffmaterial zu verwenden. Es kann ein spezielles für das Zweikomponenten-Spritzgussverfahren eingerichtetes Spritzgusswerkzeug eingesetzt werden oder es kann auf die sogenannte Einlegetechnik zurückgegriffen werden. Durch das Zweikomponenten-Spritzgussverfahren wird im Vergleich zum Einkomponenten-Spritzgussverfahren die Gefahr von unerwünschten Materialanhäufungen innerhalb einer Kavität des Spritzgusswerkzeugs verringert und die Genauigkeit von Abmessungen des hergestellten Trägerelements 15 verbessert. Aufgrund der beim Zweikomponenten-Spritzgussverfahren verwendeten relativ kleinen Kavitäten kann es beim Herstellen des Trägerelements 15 nicht oder nur in einem geringen Umfang zu einer unerwünschten Verformung des Trägerelements 15 bei dessen Herstellung kommen.

Darüber hinaus ist es gemäß einer anderen Ausführungsform der Erfindung denkbar, dass das Trägerelement 15 aus einem besonders gut wärmeleitfähigen Material, insbesondere Metall, bspw. Aluminium, besteht. Es könnte mittels Metalldruckguss hergestellt werden. Diese Ausführungsform hat insbesondere unter thermischen Gesichtspunkten Vorteile. Vor allem wäre diese Ausführungsform in Verbindung mit dem Ausführungsbeispiel aus den Figuren 8 und 9 interessant, wo ein Kühlkörper 71 mit dem Trägerelement 15 in Verbindung steht. Insbesondere wäre es möglich, dass der Kühlkörper selbst das Trägerelement 15 bildet.

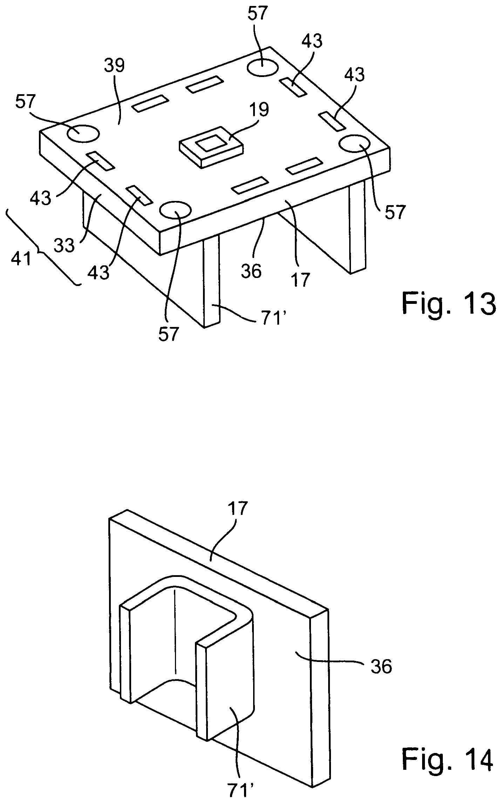

Ein letztes Ausführungsbeispiel der Erfindung ist in den Figuren 13 und 14 gezeigt. Dabei ist der Kühlkörper 71' an dem Leitungsträger 17 befestigt, vorzugsweise auf der der Leuchtdiode 19 gegenüberliegenden Unterseite 36 des Leitungsträgers 17. Die Leuchtdiode 19 und der Kühlkörper 71' stehen thermisch miteinander in Verbindung, um eine gute Wärmeableitung von der Leuchtdiode 19 zu dem Kühlkörper 71' zu ermöglichen. In Figur 14 ist der Leitungsträger 17 gemäß der Ausführungsform aus Figur 13 in einer perspektivischen Ansicht von unten dargestellt.

Insgesamt ermöglicht die Erfindung, dass das Leuchtdiodenmodul 13 einheitliche, standardisierte Leitungsträger 17 aufweist, deren Abmessungen und Konturen unabhängig vom Typ der Leuchtdiode 19 stets gleich sind. Die Leitungsträger 17 bilden eine Schnittstelle zwischen verschiedenen Arten von Leuchtdioden 19 und dem Trägerelement 15, auf dem sie befestigt werden sollen. Auf diese Weise ergibt sich ein modularer Aufbau der Beleuchtungseinrichtung bzw. des Leuchtdiodenmoduls 13. Durch Integrieren weiterer Bauteile der Beleuchtungseinrichtung in das Trägerelement 15 bzw. in den Leitungsträger 17 kann die Teilezahl der Beleuchtungseinrichtung gering gehalten werden.

Für das Verfahren, nach dem gemäß der Erfindung die mindestens eine Leuchtdiode 19 auf einem Trägerelement 15 eines Leuchtdiodenmoduls 13 einer Beleuchtungseinrichtung für ein Kraftfahrzeug befestigt und kontaktiert werden soll, wird vorgeschlagen, dass die mindestens eine Leuchtdiode 19 vorzugsweise in einer anderen Montagelinie auf dem Leitungsträger 17 befestigt und kontaktiert wird als die Montagelinie, in der die Beleuchtungseinrichtung montiert wird. Ferner ist es vorteilhaft, wenn der Leitungsträger 17 mit der mindestens einen Leuchtdiode 19 in der Montagelinie, in der die Beleuchtungseinrichtung montiert wird, auf dem Trägerelement 15 befestigt und kontaktiert wird. Außerdem ist bevorzugt, wenn die mindestens eine Leuchtdiode 19 in einer durch den Typ der mindestens einen Leuchtdiode 19 vorgegebenen Art und Weise auf dem Leitungsträger 17 befestigt und kontaktiert wird.

Im Rahmen des Befestigungs- und Kontaktierungsverfahrens wird der Leitungsträger 17 vorzugsweise mit der mindestens einen Leuchtdiode 19 in einer Art und Weise, die unabhängig vom Typ der mindestens einen Leuchtdiode 19 ist, auf dem Trägerelement 15 befestigt und kontaktiert. Ferner ist bevorzugt, dass die Befestigung und Kontaktierung der mindestens einen Leuchtdiode 19 auf dem Leitungsträger 17 in einem einzigen Arbeitsschritt erfolgt. Schließlich erfolgt die Befestigung und Kontaktierung des Leitungsträgers 17 mit der mindestens einen Leuchtdiode 19 auf dem Trägerelement 15 vorzugsweise in einem einzigen Arbeitsschritt.

## Patentansprüche

1. Leuchtdiodenmodul (13) einer Beleuchtungseinrichtung für ein Kraftfahrzeug, das Leuchtdiodenmodul (13) umfassend ein Trägerelement (15), auf dem mindestens eine Leuchtdiode (19) befestigt und kontaktiert ist, wobei die mindestens eine Leuchtdiode (19) auf einem Leitungsträger (17) befestigt und kontaktiert ist und der Leitungsträger (17) seinerseits an dem Trägerelement (15) befestigt und kontaktiert ist, wobei der Leitungsträger (17) unabhängig von dem Typ der mindestens einen darauf befestigten und kontaktierten Leuchtdiode (19) einen vorgegebenen Standardaufbau hinsichtlich Befestigung und Kontaktierung an dem Trägerelement (15) aufweist und entsprechende Befestigungsmittel (55) und Kontaktierungsmittel (41) aufweist, **dadurch gekennzeichnet, dass** der Leitungsträger (17) unterschiedlich ausgebildete Mittel (55; 41) zur Befestigung und Kontaktierung des Leitungsträgers (17) an dem Trägerelement (15) aufweist und die Befestigungs- und Kontaktierungsmittel des Trägerelements (15) zur Befestigung und Kontaktierung des Leitungsträgers (17) über mindestens eines der an dem Leitungsträger (17) ausgebildeten Befestigungsmittel (55) und Kontaktierungsmittel (41) ausgebildet sind.

2. Leuchtdiodenmodul (13) nach Anspruch 1, **dadurch gekennzeichnet, dass** die Befestigungsmittel (55) des Leitungsträgers (17) mindestens eine Seite (33), vorzugsweise zwei gegenüberliegende Seiten (33), des Leitungsträgers (17) umfassen.

3. Leuchtdiodenmodul (13) nach Anspruch 1 oder 2, **dadurch gekennzeichnet, dass** die Befestigungsmittel (55) des Leitungsträgers (17) mindestens ein Befestigungsloch (57), vorzugsweise zwei oder vier Befestigungslöcher (57) an verschiedenen Ecken des Leitungsträgers (17), aufweisen.

4. Leuchtdiodenmodul (13) nach einem der Ansprüche 1 bis 3, **dadurch gekennzeichnet, dass** die Kontaktierungsmittel (41) des Leitungsträgers (17) mindestens ein Steckerelement (53), mindestens eine Lötfläche (51) und/oder mindestens eine Kontaktfläche (43) aufweisen.

5. Leuchtdiodenmodul (13) nach einem der Ansprüche 1 bis 4, **dadurch gekennzeichnet, dass** die Befestigungs- und Kontaktierungsmittel des Trägerelements (15) derart ausgebildet sind, dass bei Befestigung des Leitungsträgers (17) an dem Trägerelement (15) dieser gleichzeitig zwangsläufig an dem Trägerelement (15) kontaktiert wird.

6. Leuchtdiodenmodul (13) nach einem der Ansprüche 1 bis 5, **dadurch gekennzeichnet, dass** an dem Leitungsträger (17) Mittel (21'; 63) zum Bündeln der von der mindestens einen Leuchtdiode (19) ausgesandten Lichtstrahlen befestigt sind.

7. Leuchtdiodenmodul (13) nach Anspruch 6, **dadurch gekennzeichnet, dass** die Mittel zum Bündeln der von der mindestens einen Leuchtdiode (19) ausgesandten Lichtstrahlen mindestens einen Reflektor (21') und/oder mindestens eine Vorsatzoptik (63) umfassen.

8. Leuchtdiodenmodul (13) nach einem der Ansprüche 1 bis 7, **dadurch gekennzeichnet, dass** an dem Leitungsträger (17) Mittel (71) zum Abführen von während des Betriebs der mindestens einen Leuchtdiode (19) von dieser erzeugter Wärme befestigt sind.

9. Leuchtdiodenmodul (13) nach Anspruch 8, **dadurch gekennzeichnet, dass** die Mittel zum Abführen der Wärme mindestens einen Kühlkörper (71) umfassen.

10. Leuchtdiodenmodul (13) nach Anspruch 9, **dadurch gekennzeichnet, dass** der Kühlkörper (71) auf einer der mindestens einen Leuchtdiode (19) gegenüberliegenden Seite über den Leitungsträger (17) hinausragt.

11. Leuchtdiodenmodul (13) nach einem der Ansprüche 1 bis 10, **dadurch gekennzeichnet, dass** das Trägerelement (15) der mindestens einen Leuchtdiode (19) zugeordnete integrierte optisch wirksame Elemente (21) aufweist.

12. Leuchtdiodenmodul (13) nach einem der Ansprüche 1 bis 11, **dadurch gekennzeichnet, dass** das Trägerelement (15) integrierte Leiterbahnen aufweist.

13. Leuchtdiodenmodul (13) nach einem der Ansprüche 1 bis 12, **dadurch gekennzeichnet, dass** zwei oder mehr Leitungsträger (17) auf dem Trägerelement (15) befestigt und kontaktiert sind.

14. Leuchtdiodenmodul (13) nach einem der Ansprüche 1 bis 13, **dadurch gekennzeichnet, dass** das Trägerelement (15) als eine optisch transparente Lichtscheibe ausgebildet ist.

15. Kraftfahrzeugbeleuchtungseinrichtung mit mindestens einem Leuchtdiodenmodul (13), das ein Trägerelement (15) umfasst, auf dem mindestens eine Leuchtdiode (19) befestigt und kontaktiert ist, **dadurch gekennzeichnet, dass** die Beleuchtungseinrichtung mindestens ein Leuchtdiodenmodul (13) nach einem der Ansprüche 1 bis 14 umfasst.

## Claims

1. A light emitting diode module (13) of a lighting device for a motor vehicle, the light emitting diode module (13) including a carrier element (15) on which at least one light emitting diode (19) is secured and contacted, the at least one light emitting diode (19) being secured and contacted on a line carrier (17) and the line carrier (17) being secured and contacted in turn on the carrier element (15), and the line carrier (17), regardless of the type of light emitting diode (19) secured and contacted thereon, having a predetermined standard design with regard to securing and contacting on the carrier element (15) and having corresponding securing means (55) and contact-making means (41), **characterized in that** the line carrier (17) has variously embodied means (55; 41) for securing and contacting the line carrier (17) to the carrier element (15), and the securing and contacting means of the carrier element (15) are embodied for securing and contacting the line carrier (17) via at least one of the securing means (55) and contact-making means (41) embodied on the line carrier (17).

2. The light emitting diode module (13) of claim 1, **characterized in that** the securing means (55) of the line carrier (17) include at least one side (33), and preferably two opposed sides (33), of the line carrier (17).

3. The light emitting diode module (13) of claim 1 or 2, **characterized in that** the securing means (55) of the line carrier (17) have at least one securing hole (57), and preferably two or four securing holes (57), on different corners of the line carrier (17).

4. The light emitting diode module (13) of one of claims 1 through 3, **characterized in that** the contact-making means (41) of the line carrier (17) have at least one plug element (53), at least one soldering face (51), and/or at least one contact face (43).

5. The light emitting diode module (13) of one of claims 1 through 4, **characterized in that** the securing and contact-making means of the carrier element (15) are embodied such that when the line carrier (17) is secured on the carrier element (15), the line carrier is necessarily simultaneously contacted on the carrier element (15).

6. The light emitting diode module (13) of one of claims 1 through 5, **characterized in that** means (21'; 63) for focusing the beams of light emitted by the at least one light emitting diode (19) are secured on the line carrier (17).

7. The light emitting diode module (13) of claim 6, **characterized in that** the means for focusing the beams of light emitted by the at least one light emitting diode (19) include at least one reflector (21') and/or at least one prefix optical element (63).

8. The light emitting diode module (13) of one of claims 1 through 7, **characterized in that** means (71) for dissipating heat generated by the at least one light emitting diode (19) during operation of the light emitting diode are secured on the line carrier (17).

9. The light emitting diode module (13) of claim 8, **characterized in that** the means for dissipating the heat include at least one heat sink (71).

10. The light emitting diode module (13) of claim 9, **characterized in that** the heat sink (71) protrudes past the line carrier (17) on one side, opposite the at least one light emitting diode (19).

11. The light emitting diode module (13) of one of claims 1 through 10, **characterized in that** the carrier element (15) of the at least one light emitting diode (19) has associated integrated optically effective elements (21).

12. The light emitting diode module (13) of one of claims 1 through 11, **characterized in that** the carrier element (15) has integrated conductor tracks.

13. The light emitting diode module (13) of one of claims 1 through 12, **characterized in that** two or more line carriers (17) are secured and contacted on the carrier element (15).

14. The light emitting diode module (13) of one of claims 1 through 13, **characterized in that** the carrier element (15) is embodied as an optically transparent lens.

15. A motor vehicle lighting device having at least one light emitting diode module (13), which module includes a carrier element (15) on which at least one light emitting diode (19) is secured and contacted, **characterized in that** the lighting device includes at least one light emitting diode module (13) of one of claims 1 through 14.

## Revendications

1. Module de diode luminescente (13) d'un dispositif d'éclairage de véhicule automobile, le module de diode luminescente (13) comprenant un élément de support (15) sur lequel est fixée et contactée au moins une diode luminescente (19), ladite au moins une diode luminescente (19) étant fixée et contactée sur un support de conducteurs (17) et le support de conducteurs (17) étant de son côté fixé et contacté sur l'élément de support (15), le support de conducteurs (17) comprenant indépendamment du type de ladite au moins une diode luminescente (19) un montage standardisé prédéterminé en ce qui concerne la fixation et l'établissement des contacts sur l'élément de support (15) et des moyens de fixation (55) et des moyens d'établissement de contact (41) correspondant, **caractérisé en ce que** le support de conducteurs (17) comprend des moyens différemment formés (55 ; 41) pour la fixation et l'établissement de contact du support de conducteurs (17) sur l'élément de support (15) et que les moyens de fixation et d'établissement de contact de l'élément de support (15) pour la fixation et l'établissement de contact du support de conducteurs (17) sont formés via au moins un des moyens de fixation (55) et moyens d'établissement de contact (41) formés sur le support de conducteurs (17).

2. Module de diode luminescente (13) selon la revendication 1, **caractérisé en ce que** les moyens de fixation (55) du support de conducteurs (17) comprennent au moins un côté (33), de préférence deux côtés en regard (33), du support de conducteurs (17).

3. Module de diode luminescente (13) selon la revendication 1 ou 2, **caractérisé en ce que** les moyens de fixation (55) du support de conducteurs (17) comprennent au moins un trou de fixation (57), de préférence deux ou quatre trous de fixation (57) à différents coins du support de conducteurs (17).

4. Module de diode luminescente (13) selon l'une des revendications 1 à 3, **caractérisé en ce que** les moyens d'établissement de contact (41) du support de conducteurs (17) comprennent au moins un élément connecteur (53), au moins une surface de soudage (51) et/ou au moins une surface de contact (43).

5. Module de diode luminescente (13) selon l'une des revendications 1 à 4, **caractérisé en ce que** les moyens de fixation et d'établissement de contact de l'élément de support (15) sont formés de façon que, lors d'une fixation du support de conducteurs (17) sur l'élément de support (15), celui-ci soit mis forcément et simultanément en contact sur l'élément de support 15).

6. Module de diode luminescente (13) selon l'une des revendications 1 à 5, **caractérisé en ce que** sont fixés sur le support de conducteurs (17), des moyens (21' ; 63) pour faire converger les rayons lumineux émis par ladite au moins une diode lumineuse (19).

7. Module de diode luminescente (13) selon la revendication 6, **caractérisé en ce que** les moyens pour faire converger les rayons lumineux émis par ladite au moins une diode lumineuse (19) comprennent au moins un réflecteur (21') et/ou au moins une optique rapportée (63).

8. Module de diode luminescente (13) selon l'une des revendications 1 à 7, **caractérisé en ce que** sont fixés sur le support de conducteurs (17), des moyens (71) pour l'évacuation de la chaleur produite par ladite au moins une diode luminescente (19) pendant le fonctionnement de celle-ci.

9. Module de diode luminescente (13) selon la revendication 8, **caractérisé en ce que** les moyens pour l'évacuation de la chaleur comprennent au moins un radiateur (71).

10. Module de diode luminescente (13) selon la revendication 9, **caractérisé en ce que** le radiateur (71) dépasse du support de conducteurs (17) sur un côté opposé à ladite au moins une diode luminescente (19).

11. Module de diode luminescente (13) selon l'une des revendications 1 à 10, **caractérisé en ce que** l'élément de support (15) comprend des éléments intégrés optiquement efficaces (21) associés à ladite au moins une diode luminescente (19).

12. Module de diode luminescente (13) selon l'une des revendications 1 à 11, **caractérisé en ce que** l'élément de support (15) comprend des conducteurs intégrés.

13. Module de diode luminescente (13) selon l'une des revendications 1 à 12, **caractérisé en ce que** deux ou davantage de supports de conducteurs (17) sont fixés et contactées sur l'élément de support (15).

14. Module de diode luminescente (13) selon l'une des revendications 1 à 13, **caractérisé en ce que** l'élément de support (15) est formé comme disque lumineux optiquement transparent.

15. Dispositif d'éclairage d'automobile avec au moins un module de diode luminescente (13) qui comprend un élément de support (15) sur lequel est fixée et contactée au moins une diode luminescente (19), **caractérisé en ce que** le dispositif d'éclairage comprend au moins au moins un module de diode luminescente (13) selon l'une des revendications 1 à 14.
